# EUROPÄISCHE PATENTSCHRIFT

(11) **EP 4 484 792 B1**
(45) Veröffentlichungstag und Bekanntmachung des Hinweises auf die Patenterteilung: **17.06.2026**
(21) Anmeldenummer: 24182916.7
(22) Anmeldetag: 18.06.2024
(51) Int. Cl.: F16G 1/10, B29D 29/00, F16G 5/08

(54) **NEUARTIGE OBERFLÄCHENBESCHICHTUNG FÜR ZAHNRIEMEN MIT MIKROKÜGELCHEN AUF SILIKONBASIS**
NOVEL SURFACE COATING FOR TOOTHED BELT COMPRISING SILICONE-BASED MICROSPHERES
NOUVEAU REVÊTEMENT DE SURFACE POUR COURROIE DENTÉE COMPRENANT DES MICROSPHÈRES À BASE DE SILICONE

(30) Priorität: 26.06.2023 DE 102023205975
(43) Veröffentlichungstag der Anmeldung: 01.01.2025
(73) Patentinhaber: ContiTech Deutschland GmbH, 30175 Hannover (DE)
(72) Erfinder: Dr. Jonczyk, Patrick, 30175 Hannover (DE); Mahnken, Claus-Lüder, 30175 Hannover (DE); Dr. Dikmans, Antonius, 30175 Hannover (DE); Dr. Well, Michael, 30175 Hannover (DE); Schönfelder, Florian, 30175 Hannover (DE)
(74) Vertreter: Preusser, Andrea

(56) Entgegenhaltungen:
- EP-B1- 0 517 883
- EP-B1- 3 094 580
- WO-A1-2017/110790
- GB-A- 2 049 485
- JP-A- 2013 113 343
- US-B2- 9 568 070

## Beschreibung

Die Erfindung betrifft Elastomerartikel, insbesondere Antriebsriemen, mit gleitfähiger Oberfläche, die für den Einsatz in verschiedensten Antriebssystemen geeignet sind.

Bei Antriebsriemen (zum Beispiel EP3094580B1) schützen in der Regel Beschichtungen aus textilen Flächenkörpern, wie z.B. einem Gewebe, vor Verschleiß. Insbesondere bei Zahnriemen wird dadurch das mechanisch besonders belastete Zahngewebe vor Verschleiß geschützt. Die Kraftübertragungszone oder Laufseite von Antriebsriemen muss einerseits reibbeständig sein, um den Belastungen im Betrieb standzuhalten, andererseits aber auch eine angemessene Gleitreibung zeigen.

Um diese Anforderungen zu erfüllen, sieht der Stand der Technik im Allgemeinen einen textilen Flächenkörper auf der Laufseite von Antriebsriemen vor, der mit einer Fluorpolymer-haltigen, insbesondere PTFE-haltigen Beschichtung ausgerüstet ist, um die gewünschte Gleitreibung zu erzeugen. PTFE ist Polytetrafluorethylen bzw. Teflon.

Die Diskussionen um die biopersistenten Eigenschaften von PTFE und anderen fluorhaltigen Polymeren und deren mögliche Kontaminationen mit perfluorierten Säuren reißen nicht ab, und es gibt berechtigte Zweifel daran, dass PTFE und verwandte Fluor-Verbindungen langfristig umwelttechnisch die beste Lösung für die Kraftübertragungszone von Antriebsriemen darstellen. Außerdem neigt PTFE zu Agglomeration und haftet sehr gut an Metallen, was die Verarbeitbarkeit erschwert.

Die Aufgabe der vorliegenden Erfindung besteht in der Überwindung der vorstehend beschriebenen Nachteile des Standes der Technik. Insbesondere bestand die Aufgabe der Erfindung in der Bereitstellung eines Elastomerartikels, insbesondere eines Treibriemens, der eine nachhaltigere und sicherere Oberflächenschicht auf der Kraftübertragungszone als die im Stand der Technik verwendeten Beschichtungen wie PTFE-basierte Beschichtungen aufweist und gleichzeitig eine zumindest gleichwertige Gleitreibung zeigt. Ferner sollte eine ausreichende Festigkeit bzw. Reibbeständigkeit erreicht werden. Darüber hinaus sollten die Verarbeitbarkeit erschwerende Eigenschaften von PTFE-basierte Beschichtungen, wie die unerwünschte Haftung an Metallen, aus denen die meisten Formvorrichtungen gebildet sind, verringert oder vermieden werden.

Es wurde festgestellt, dass dies durch die Verwendung eines Verbunds aus einer Elastomerplatte, die Polyorganosiloxan-Teilchen, insbesondere Polyorganosiloxan-Kügelchen, enthält, und einem textilen Flächenkörper als Oberflächenschicht erreicht werden kann.

Die Erfindung betrifft somit einen Elastomerartikel, umfassend einen elastomeren Grundkörper und einen Verbund aus einer Elastomerplatte und einem textilen Flächenkörper, wobei der Verbund als Oberflächenschicht auf einer Seite des Grundkörpers angeordnet ist, so dass der textile Flächenkörper dem Grundkörper zugewandt ist, und wobei die Elastomerplatte Teilchen, bevorzugt Kügelchen, aus vernetztem Polyorganosiloxan enthält.

Die erfindungsgemäßen Elastomerartikel zeichnen sich dadurch aus, dass die eingesetzten Teilchen, bevorzugt Mikrokügelchen, aus vernetztem Polyorganosiloxan im Gegensatz zu PTFE nicht bioakkumulierend und biopersistent sind. Wird PTFE als funktionalisierte Oberfläche für Antriebsriemen eingesetzt, kommt es durch Verschleiß zwangläufig zu einem Eintrag in die Umgebung. Das erfindungsgemäß eingesetzte Verbundmaterial ist gut recycelbar und der Umwelteintrag ist nicht bioakkumulierend oder -persistent. Dagegen wird PTFE in der Regel verbrannt, was toxische Reaktionsprodukte wie Flusssäure entstehen lässt.

Die Abriebfestigkeit des als Oberflächenschicht eingesetzten Verbunds ist etwa gleichwertig oder sogar besser im Vergleich zu mit PTFE ausgerüsteten Textilien. Der gleitgebende Effekt des erfindungsgemäß als Oberflächenschicht eingesetzten Verbunds ist überdies im Vergleich zu mit PTFE ausgerüsteten Textilien verstärkt und es muss weniger Material eingesetzt werden, was einen weiteren Umwelt- und auch einen Kostenvorteil darstellt. Somit wird erfindungsgemäß die notwendige Gleitreibung bzw. eine hohe Gleitfähigkeit von Antriebsriemen gewährleistet. Insgesamt ist die Laufdauer erfindungsgemäßer Antriebsriemen im Vergleich zu mit PTFE beschichteten Antriebsriemen erhöht.

Ebenso ist die Verarbeitbarkeit im Vergleich zu PTFE verbessert, da z.B. das Haftvermögen an Metalloberflächen von Formen, die für die Formgebung eingesetzt werden, verringert wird. Es sind auch keine perfluorierten Säuren (PFAS) vorhanden, die als Kontamination schädlich für Mensch, Tier und Umwelt wirken können.

Somit kann der erfindungsgemäß eingesetzte Verbund als nachhaltiger und sicherer Ersatz für Oberflächenschichten aus mit fluorhaltigen Polymeren ausgerüsteten textilen Flächenkörpern nach dem Stand der Technik dienen.

In den beigefügten Zeichnungen zeigt
- Fig. 1: ein Beispiel für die Bildung eines Verbunds durch erfindungsgemäße Feststoffbeschichtung eines Gewebes mit einer Kautschukplatte, die Kügelchen aus vernetztem Polyorganosiloxan enthält,
- Fig. 2: ein Beispiel für einen schematischen Ablauf eines erfindungsgemäßen Verfahrens zur Herstellung eines erfindungsgemäßen Gummizahnriemens.

Die Erfindung wird nachstehend im Einzelnen erläutert.

Der erfindungsgemäße Elastomerartikel kann jeder übliche Elastomerartikel sein. Der erfindungsgemäße Elastomerartikel ist bevorzugt ein Antriebsriemen. Der Antriebsriemen kann z.B. ausgewählt sein aus einem Transportriemen, einem Flachriemen, einem Keilriemen, einem Keilrippenriemen oder einem Zahnriemen. Der Antriebsriemen ist besonders bevorzugt einem Zahnriemen.

Der erfindungsgemäße Elastomerartikel weist einen elastomeren Grundkörper und einen Verbund auf. Der Verbund ist aus einer Elastomerplatte und einem textilen Flächenkörper gebildet.

Der textile Flächenkörper des Verbunds kann jeder übliche textile Flächenkörper sein. Der textile Flächenkörper ist bevorzugt ein Gewebe, ein Gewirke oder ein Gestrick, wobei ein Gewebe besonders bevorzugt ist.

Der textile Flächenkörper, insbesondere das Gewebe, bzw. die Garne oder Fasern, aus denen der textile Flächenkörper gebildet wird, können z.B. aus Polyamid (PA), Polyester, Naturfasern, wie z.B. Baumwolle, Aramid, Cellulose, Polyurethan, Polyetheretherketon (PEEK), Polyimid (Pl) oder einer Kombination davon gebildet sein. In einer bevorzugten Ausführungsform ist der textile Flächenkörper, insbesondere das Gewebe, aus Polyamid gebildet.

Die Dicke des textilen Flächenkörpers kann z.B. im Bereich von 0,5 bis 2 mm, bevorzugt 0,8 bis 1,7 mm, liegen.

Die in Elastomerartikeln, insbesondere Antriebsriemen, eingesetzten textilen Flächenkörpern sind üblicherweise mit einer polymeren Ausrüstung bzw. Imprägnierung versehen. Erfindungsgemäß ist es bevorzugt, dass der textile Flächenkörper nicht mit einer polymeren Ausrüstung versehen ist, insbesondere nicht mit einer Ausrüstung aus einem fluorhaltigen Polymer.

Die Elastomerplatte des Verbunds ist insbesondere aus einem vulkanisierten Kautschukcompound gebildet. Das Kautschukcompound kann jeden auf dem Gebiet üblichen geeigneten Kautschuk oder jede geeignete Mischung von Kautschuken umfassen.

Der Kautschuk in dem Kautschukcompund für die Elastomerplatte ist bevorzugt ausgewählt aus der Gruppe bestehend aus (teil)hydriertem Nitrilkautschuk (HNBR), Nitrilkautschuk (NBR), Ethylen-Propylen-Kautschuk (EPM), Ethylen-Propylen-Dien-Kautschuk (EPDM), Naturkautschuk (NR), Polychloropren-Kautschuk (CR), Butadien-Kautschuk (BR), Styrol-Butadien-Kautschuk (SBR), Ethylen-Vinyl-Acetat-Copolymer (EVA), Polyurethan (PU) oder Mischungen davon. Der Kautschuk ist bevorzugt ausgewählt aus (teil)hydriertem Nitrilkautschuk (HNBR), Ethylen-Propylen-Dien-Kautschuk (EPDM), Nitrilkautschuk (NBR) oder einer Mischung davon oder eine Mischung eines dieser Kautschuke mit einem weiteren genannten Kautschuk.

Es ist bevorzugt, dass das Kautschukcompound für die Elastomerplatte keinen Fluorkautschuk (FKM) enthält.

Die Elastomerplatte bzw. das Kautschukcompound, aus dem die Elastomerplatte gebildet ist, enthält erfindungsgemäß Teilchen aus vernetztem Polyorganosiloxan. Das vernetzte Polyorganosiloxan liegt somit als Feststoff in Teilchenform vor. Die Teilchen aus vernetztem Polyorganosiloxan sind bevorzugt kugelförmige Teilchen bzw. Kügelchen, besonders bevorzugt Mikrokügelchen. Der mittlere Durchmesser der Teilchen bzw. Mikrokügelchen liegt somit bevorzugt im Mikrometerbereich.

In einer bevorzugten Ausführungsform weisen die Teilchen, bevorzugt Kügelchen, aus vernetztem Polyorganosiloxan einen mittleren Durchmesser von 0,5 bis 12 µm, bevorzugt von 1 bis 10 µm, bevorzugter von 1,5 bis 5 µm, auf.

Der mittlere Durchmesser wie hier verwendet bezieht sich auf das Zahlenmittel und kann z.B. mittels einer Lichttransmissionsmessung in einer Dispersion (z.B. Ultraschalldispersion mit Isopropanol als Dispersionsmittel, Sedimentations- oder Zentrifugalsedimentation) bestimmt werden. Eine geeignete Messvorrichtung hierfür ist z.B. das Teilchengrößenverteilungs-Analysegerät Horiba CAPA 700.

Der Mengenanteil der Teilchen, bevorzugt Kügelchen, aus vernetztem Polyorganosiloxan in der Elastomerplatte bzw. in dem Kautschukcompound für die Elastomerplatte beträgt z.B. 5 bis 60 phr, bevorzugt 10 bis 50 phr, bevorzugter 20 bis 40 phr. Phr bedeutet hierbei Gewichtsteile pro 100 Gewichtsteile Kautschuk.

Die Teilchen bzw. Kügelchen sind aus vernetztem Polyorganosiloxan. Vernetztes Polyorganosiloxan wird auch als vernetztes Silikon bzw. Silikonharz bezeichnet. Solche vernetzten Polyorganosiloxane sind Stand der Technik.

Das vernetzte Polyorganosiloxan enthält organische Gruppen, die an den Siliciumatomen des Polyorganosiloxans gebunden sind. Die organischen Gruppen sind bevorzugt Phenylgruppen und/oder Alkylgruppen, wobei Alkylgruppen bevorzugt sind. Die Alkylgruppen sind bevorzugt Alkylgruppen mit 1 bis 8 Kohlenstoffatomen, bevorzugt 1 oder 2 Kohlenstoffatomen. Ethylgruppen und insbesondere Methylgruppen sind besonders bevorzugt.

Vernetzte Polyorganosiloxane können durch Hydrolyse und Kondensation von hydrolysierbaren Silanen, die mindestens teilweise eine organische Gruppe am Siliciumatom gebunden aufweisen, hergestellt werden. Diese Verfahren sind dem Fachmann bekannt. Die Hydrolyse und Kondensation kann durch eine Base oder Säure katalysiert werden, wobei eine basische Katalyse, z.B. mit NH₃ oder einem Alkalihydroxid, wie NaOH, bevorzugt ist.

Insbesondere kann ein vernetztes Polyorganosiloxan durch Hydrolyse und Kondensation von mindestens einem Silan der Formel RSiX₃ und gegebenenfalls einem oder mehreren Silanen ausgewählt aus R₃SiX, R₂SiX₂ und SiX₄ hergestellt werden, wobei R unabhängig voneinander eine organische Gruppe ist und X unabhängig voneinander eine hydrolysierbare Gruppe ist. R ist bevorzugt Phenyl oder Alkyl, bevorzugt Alkyl, insbesondere ein Alkyl mit 1 bis 8 Kohlenstoffatomen oder ein Alkyl mit 1 bis 6 Kohlenstoffatomen, bevorzugter Methyl oder Ethyl, wobei Methyl besonders bevorzugt ist. X ist bevorzugt ein Halogenatom, bevorzugt Cl, oder eine Alkoxygruppe, bevorzugt eine Alkoxygruppe mit 1 bis 4 Kohlenstoffatomen, insbesondere Methoxy oder Ethoxy. Bevorzugte Beispiele für Silane der Formel RSiX₃ sind Methyltrichlorsilan, Methyltrimethoxysilan, Methyltriethoxysilan, Ethyltrichlorsilan, Ethyltrimethoxysilan und Ethyltriethoxysilan.

Bei der Hydrolyse von Silanen der Formel RSiX₃ werden die hydrolysierbaren Gruppen X unter Bildung von Silanolgruppen (-Si-OH) hydrolysiert. Diese Silanolgruppen sind reaktiv und kondensieren untereinander unter Bildung von -Si-O-Si- Brücken, so dass Kondensate bzw. vernetzte Polyorganosiloxane mit folgenden Struktureinheiten gebildet werden können:

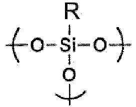

Gegebenenfalls kann bei den Hydrolyse- und Kondensationsreaktionen neben dem mindestens einen Silan der Formel RSiX₃ ein Anteil an einem oder mehreren Silanen ausgewählt aus R₃SiX, R₂SiX₂ und SiX₄ zugemischt werden, wodurch der Vernetzungsgrad des Polyorganosiloxans variiert werden kann. In einer bevorzugten Ausführungsform wird aber nur mindestens einen Silan der Formel RSiX₃ eingesetzt.

Das vernetzte Polyorganosiloxan ist bevorzugt ein Silsesquioxan. Silsesquioxane weisen typischerweise RSiO_{1,5} als Struktureinheiten oder Summenformel auf, wobei R die organische Gruppe ist. Silsesquioxane sind im Allgemeinen aus Struktureinheiten wie vorstehend abgebildet aufgebaut. Die organische Gruppe (R) des Silsesquioxans ist bevorzugt unabhängig voneinander Phenyl oder Alkyl, bevorzugt Alkyl, insbesondere ein Alkyl mit 1 bis 8 Kohlenstoffatomen oder ein Alkyl mit 1 bis 6 Kohlenstoffatomen, bevorzugter Methyl oder Ethyl, wobei Methyl besonders bevorzugt ist. Das vernetzte Polyorganosiloxan ist besonders bevorzugt ein Methylsilsesquioxan.

Teilchen oder Kügelchen aus vernetzten Polyorganosiloxanen bzw. Silsesquioxanen sind im Handel erhältlich. Besonders geeignet sind z.B. die Mikrokügelchen mit der Handelsbezeichnung Tospearls^{®} von Momentive, Deutschland, die mit unterschiedlichen Größen verfügbar sind, wie z.B. Tospearls^{®} 120, welches einen mittleren Teilchendurchmesser von etwa 2 µm aufweist und besonders geeignet ist.

Die Elastomerplatte bzw. das Kautschukcompound für die Elastomerplatte enthält neben dem Kautschuk oder der Mischung von Kautschuken und den Teilchen, bevorzugt Kügelchen, aus vernetztem Polyorganosiloxan in der Regel noch ein oder mehrere Additive, insbesondere gewöhnlich mindestens einen Vernetzer oder ein Vernetzersystem aus Vernetzungsmittel und Beschleuniger. Der Vernetzer bzw. das Vernetzersystem können z.B. mindestens ein Peroxid und/oder mindestens ein Metalloxid beinhalten. Weitere Beispiele für Additive sind Füllstoffe, Verarbeitungshilfsmittel, Weichmacher, Alterungsschutzmittel und Kombinationen davon. Weitere nach Bedarf einsetzbare Additive sind z.B. Farbpigmente oder Harze. Es wird auf den allgemeinen Stand der Kautschukmischungstechnologie verwiesen.

Die Elastomerplatte des Verbunds weist z.B. eine Dicke im Bereich von 0,1 bis 1,0 mm, bevorzugt von 0,2 bis 0,4 mm, auf. Eine Elastomerplatte mit einer Dicke von etwa 0,3 mm hat sich z.B. als sehr geeignet erwiesen.

Das Kautschukcompund wird durch Eincompoundieren der Teilchen, bevorzugt Kügelchen, aus vernetztem Polyorganosiloxan und in der Regel eines oder mehrerer Additive in den Kautschuk oder der Mischung der Kautschuke erhalten. Der Kautschukcompound wird dann zu einer unvulkanisierten Kautschukplatte geformt, in der Regel durch eine Kalanderbehandlung.

Der Verbund wird durch Beschichten des textilen Flächenkörpers mit der unvulkanisierten Kautschukplatte vorgebildet. Die Beschichtung erfolgt bevorzugt durch Kalandrieren einer übereinandergelegten Anordnung von der unvulkanisierten Kautschukplatte mit dem textilen Flächenkörper, z.B. über den Skimprozess. Die Beschichtung wird vorzugsweise durch Erwärmen unterstützt. Bei der Beschichtung dringt die Kautschukplatte gewöhnlich teilweise in den textilen Flächenkörper ein. Die Eindringtiefe der Kautschukplatte in den textilen Flächenkörper kann über die Prozessparameter eingestellt werden.

Dieser Verbund bzw. Vorverbund kann weiter für einen Elastomerartikel, insbesondere Antriebsriemen, verarbeitet werden und bildet dann vorzugsweise die Funktionsoberfläche der Laufseite des Antriebsriemens, z.B. der Zahn- oder Rippenseite.

Im Gegensatz zur der im Stand der Technik üblicherweise verwendeten Ausrüstung des textilen Flächenkörpers durch nasse Beschichtung bzw. Imprägnierung mit einem flüssigen Ausrüstungsmittel erfolgt erfindungsgemäß eine sogenannte trockene Beschichtung des textilen Flächenkörpers mit der Kautschukplatte bzw. der Elastomerplatte.

Auf diese Weise wird gewöhnlich ein unsymmetrischer Verbund bzw. Vorverbund gebildet, bei dem auf einer Seite (die beschichtete Seite) die unvulkanisierten Kautschukplatte liegt und auf der anderen Seite (die unbeschichtete Seite) der textile Flächenkörper herausragt. In der Zwischenzone des Vorverbunds befindet sich der Teil des textilen Flächenkörpers, in den die Kautschukplatte eingedrungen ist. Bei der späteren Vulkanisation des Elastomerkörpers wird auch die unvulkanisierte Kautschukplatte unter Bildung der Elastomerplatte vulkanisiert.

Der Elastomerartikel umfasst ferner einen elastomeren Grundkörper. Der Grundkörper kann auch als elastischer Grundkörper bezeichnet werden. Der Elastomerartikel des Verbunds ist insbesondere aus einem vulkanisierten Kautschukcompound gebildet. Das Kautschukcompound kann jeden auf dem Gebiet üblichen geeigneten Kautschuk oder jede geeignete Mischung von Kautschuken umfassen.

Der Kautschuk in dem Kautschukcompund für den elastomeren Grundkörper ist bevorzugt ausgewählt aus der Gruppe bestehend aus (teil)hydriertem Nitrilkautschuk (HNBR), Nitrilkautschuk (NBR), Ethylen-Propylen-Kautschuk (EPM), Ethylen-Propylen-Dien-Kautschuk (EPDM), Naturkautschuk (NR), Polychloropren-Kautschuk (CR), Butadien-Kautschuk (BR), Ethylen-Vinyl-Acetat-Copolymer (EVA), Polyurethan (PU), Styrol-Butadien-Kautschuk (SBR), Fluorkautschuk (FKM) oder Mischungen davon. Der Kautschuk ist bevorzugt ausgewählt aus HNBR, NBR, EPDM oder einer Mischung davon oder eine Mischung eines dieser Kautschuke mit einem weiteren genannten Kautschuk.

Der elastomere Grundkörper bzw. das Kautschukcompound für den elastomeren Grundkörper enthält neben dem Kautschuk oder der Mischung von Kautschuken in der Regel noch ein oder mehrere Additive, insbesondere gewöhnlich mindestens einen Vernetzer oder ein Vernetzersystem aus Vernetzungsmittel und Beschleuniger. Der Vernetzer bzw. das Vernetzersystem können z.B. mindestens ein Peroxid und/oder mindestens ein Metalloxid beinhalten. Weitere Beispiele für Additive sind Füllstoffe, Verarbeitungshilfsmittel, Weichmacher, Alterungsschutzmittel und Kombinationen davon. Weitere nach Bedarf einsetzbare Additive sind z.B. Farbpigmente oder Harze. Es wird auf den allgemeinen Stand der Kautschukmischungstechnologie verwiesen.

Das Kautschukcompund für den elastomeren Grundkörper wird in der Regel durch Eincompoundieren eines oder mehrerer Additive in den Kautschuk oder der Mischung der Kautschuke erhalten. Der Kautschukcompound wird dann in eine unvulkanisierte Kautschukplatte geformt, in der Regel durch eine Kalanderbehandlung. Bei der späteren Vulkanisation der unvulkanisierten Kautschukplatte wird der elastomere Grundkörper gebildet.

Bei dem erfindungsgemäßen Elastomerartikel ist der Verbund aus Elastomerplatte und textilem Flächenkörper als Oberflächenschicht auf einer Seite des elastomeren Grundkörpers angeordnet, so dass der textile Flächenkörper dem Grundkörper zugewandt ist.

Der Verbund bildet so die Oberflächenschicht auf einer Seite des elastomeren Grundkörpers. Die Seite des elastomeren Grundkörpers, auf der der Verbund angeordnet ist, ist dabei besonders bevorzugt eine Kraftübertragungszone des Elastomerartikels, bevorzugt die Kraftübertragungszone eines Antriebsriemens. Die Kraftübertragungszone eines Antriebsriemens wird auch als Laufseite bezeichnet.

In einer bevorzugten Ausführungsform weist der elastomere Grundkörper auf einer Seite eine profilierte Oberfläche auf, z.B. in Form von Zähnen bei einem Zahnriemen. Der elastomere Grundkörper bildet dann den Unterbau mit der profilierten Oberfläche und den Riemenrücken. Die profilierte Oberfläche des elastomeren Grundkörpers bildet die Kraftübertragungszone, auf die der Verbund als Oberflächenschicht aufgebracht ist.

In einer Ausführungsform kann der Verbund direkt an dem elastomeren Grundkörper angebunden sein. Die Anbindung erfolgt dabei während der gegebenenfalls durchgeführten Formgebung und Vulkanisation der Anordnung, die aus der Kautschukplatte für den elastomeren Grundkörper und dem Vorverbund bzw. Verbund aus Kautschukplatte für die Elastomerplatte und dem textilen Flächenkörper gebildet ist. Gegebenenfalls kann der textile Flächenkörper auf der Seite des Verbunds, der dem elastomeren Grundkörper zugewandt ist, zur besseren Anbindung mit einem Haftvermittler versehen sein.

In einer anderen Ausführungsform umfasst der Elastomerartikel mindestens eine Zwischenschicht, insbesondere mindestens eine Haftschicht, zwischen dem elastomeren Grundkörper und dem Verbund. Die Zwischenschicht, insbesondere Haftschicht, dient zur besseren Anbindung des Verbunds an den elastomeren Grundkörper. Die mindestens eine Zwischenschicht, bevorzugt Haftschicht, kann z.B. eine Dicke im Bereich von 0,05 bis 1,0 mm, bevorzugt von 0,3 bis 0,5 mm, aufweisen.

Die Haftschicht kann z.B. aus den auf dem Gebiet üblichen Haftmitteln, wie z.B. Haftzemente oder Gummilösungen oder Bahnen aus einem Haftzement oder Gummimischung, gebildet werden. Dazu wird in der Regel vor der Bildung der Anordnung der textile Flächenkörper auf der Seite des Verbunds, der dem elastomeren Grundkörper zugewandt ist, mit dem Haftmittel versehen. Gegebenenfalls kann alternativ oder zusätzlich das Haftmittel auch auf die dem Verbund zugewandte Seite der Kautschukplatte für den elastomeren Grundkörper aufgebracht werden.

Der erfindungsgemäße Elastomerartikel kann weitere Komponente aufweisen, z.B. eine Textilauflage auf der Seite des elastomeren Grundkörpers, der der Seite mit dem Verbund als Oberflächenschicht gegenüberliegt.

In einer bevorzugten Ausführungsform umfasst der erfindungsgemäße Elastomerartikel ferner einen Festigkeitsträger, der in dem elastomeren Grundkörper eingebettet ist. Dies ist z.B. für Antriebsriemen wie z.B. Zahnriemen bevorzugt.

Der Festigkeitsträger kann aus einem oder mehreren Zugsträngen gebildet werden. Mehrere Zugstränge, die nebeneinander angeordnet sind, können dabei eine Festigkeitsträgerlage bilden. Der Festigkeitsträger im Grundkörper kann durch eine Festigkeitsträgerlage oder mehrere Festigkeitsträgerlagen gebildet sein. Der Zugstrang, insbesondere in Form von Corden, kann z.B. aus Polyamid (PA), Aramid, Polyester, Glas (z.B. E- oder K-Glas), Kohle, Polyetheretherketon (PEEK) oder Polyethylen-2,6-naphthalat (PEN) oder Kombinationen daraus (Hybrid-Cord) gebildet sein.

Wenn der Elastomerartikel ein Antriebsriemen, insbesondere ein Zahnriemen ist, verlaufen die eingebetteten Zugstränge bzw. die eingebettete Zugstranglage gewöhnlich in Riemenlängsrichtung, wobei die Zugstränge bevorzugt in Cordkonstruktion sind.

In einer bevorzugten Ausführungsform ist der erfindungsgemäße Elastomerartikel durch ein erfindungsgemäßes Verfahren erhältlich, wie es nachstehend beschrieben wird.

Die Erfindung betrifft ferner ein Verfahren zur Herstellung eines Elastomerartikels, insbesondere eines erfindungsgemäßen Elastomerartikels wie vorstehend beschrieben, wobei das Verfahren die folgenden Schritte umfasst:
a) Bilden eines Verbundes durch Beschichten eines textilen Flächenkörpers mit einer ersten unvulkanisierten Kautschukplatte, bevorzugt durch Kalandrieren, wobei die erste Kautschukplatte Teilchen, bevorzugt Kügelchen, aus vernetztem Polyorganosiloxan enthält,
b) Bauen einer Anordnung, umfassend eine zweite unvulkanisierte Kautschukplatte und den Verbund, wobei der textile Flächenkörper des Verbunds der zweiten unvulkanisierten Kautschukplatte zugewandt ist,
c) gegebenenfalls Formen der Anordnung und
d) Vulkanisieren der gegebenenfalls geformten Anordnung.

Alle Angaben zu dem erfindungsgemäßen Elastomerartikel gelten genauso auch für das erfindungsgemäße Verfahren, so dass darauf verwiesen wird.

Wie vorstehend beschrieben, wird die erste unvulkanisierte Kautschukplatte für die Elastomerplatte, die Teilchen, bevorzugt Kügelchen, aus vernetztem Polyorganosiloxan enthält, aus einem Kautschukcompound gebildet, das durch Eincompoundieren der Teilchen, bevorzugt Kügelchen, aus vernetztem Polyorganosiloxan und in der Regel eines oder mehrerer Additive in den Kautschuk oder der Mischung der Kautschuke erhalten werden. Der Kautschukcompound wird dann zur ersten unvulkanisierten Kautschukplatte geformt, in der Regel durch eine Kalanderbehandlung. Die Bestandteile des Kautschukcompound für die Elastomerplatte wurden vorstehend beschrieben.

Die erste unvulkanisierte Kautschukplatte, die die Teilchen, bevorzugt Kügelchen, aus vernetztem Polyorganosiloxan enthält, wird zur Beschichtung eines textilen Flächenkörpers verwendet, wobei die Kautschukplatte bzw. deren Material teilweise in den textilen Flächenkörper eindringt oder darin eingedrückt wird, um den Verbund bzw. Vorverbund aus Kautschukplatte und textilen Flächenkörper zu bilden. Die Beschichtung, die auch als trockene Beschichtung oder Feststoffbeschichtung bezeichnet werden kann, erfolgt bevorzugt durch Kalandrieren. Dabei werden die erste unvulkanisierte Kautschukplatte und der textile Flächenkörper übereinander angeordnet einer Kalanderbehandlung unterworfen. Eine solche Kalanderbehandlung wird auch als Skimverfahren bezeichnet und ist dem Fachmann bekannt. Die für die Kalanderbehandlung eingesetzten Kalander werden auch als Beschichtungskalander oder Laminierkalander bezeichnet.

Eine zweite unvulkanisierte Kautschukplatte für den elastomeren Grundkörper kann wie bereits vorstehend beschrieben aus einem entsprechenden Kautschukcompound für den elastomeren Grundkörper gebildet werden.

In Schritt b) wird eine Anordnung, die die zweite unvulkanisierte Kautschukplatte und den Verbund bzw. Vorverbund aus der ersten unvulkanisierten Kautschukplatte und dem textilen Flächenkörper gebaut, wobei der textile Flächenkörper des Verbunds der zweiten unvulkanisierten Kautschukplatte zugewandt ist. Zur Bildung der Anordnung werden der Verbund und die zweite unvulkanisierte Kautschukplatte einfach übereinandergelegt.

Der textile Flächenkörper auf der Seite des Verbunds, der dem elastomeren Grundkörper zugewandt ist, kann zur besseren Anbindung mit einem Haftvermittler versehen werden.

Alternativ oder zusätzlich wird vor dem Aufbauen der Anordnung auf den textilen Flächenkörper auf der Seite des Verbunds, der der zweiten Kautschukplatte zugewandt ist, und/oder auf der Seite der zweiten Kautschukplatte, die dem Verbund zugewandt ist, ein Haftmittel, wie z.B. ein Haftzement oder eine Gummilösung oder eine Bahn aus einem Haftzement oder einer Gummimischung, aufgebracht, das in dem Elastomerartikel eine Haftschicht zwischen Verbund und dem elastomeren Grundkörper bildet. In der Regel ist es bevorzugt, das Haftmittel auf den textilen Flächenkörper aufzubringen.

Sofern der erfindungsgemäße Elastomerartikel gemäß der beschriebenen bevorzugten Ausführungsform einen Festigkeitsträger umfasst, der in dem elastomeren Grundkörper eingebettet ist, können in der Anordnung zwischen dem Verbund und der zweiten Kautschukplatte ein oder mehrere Zugstränge angeordnet werden. Wie beschrieben werden der oder die Zugstränge bevorzugt in Form von Corden eingesetzt.

Ferner kann die Anordnung gegebenenfalls auf der Seite der zweiten unvulkanisierten Kautschukplatte, die dem Verbund entgegengesetzt ist, mit einem weiteren textilen Flächenkörper versehen werden, die dann auf dem elastomeren Grundkörper des fertigen Elastomerartikels, der der Seite mit dem Verbund als Oberflächenschicht gegenüberliegt, eine Textilauflage bildet.

Die Anordnung wird gemäß dem optionalen Schritt c) bevorzugt einer Formgebung unterworfen, insbesondere, wenn der Elastomerartikel mit einer profilierten Oberfläche, wie z.B. einer zahnförmigen Oberfläche, versehen werden soll. Eine solche Formgebung ist dem Fachmann bekannt. Die Anordnung wird hierfür in eine Form, z.B. eine Metallform, die eine profilierte Innenseite aufweist, eingebracht. Die Form kann z.B. in Form einer Trommel oder Metalltrommel vorliegen. Die Anordnung wird bevorzugt so in die Form eingebracht, dass der Verbund der profilierten Innenseite der Form zugewandt wird. Die Form wird dann unter Druck gesetzt und gegebenenfalls erwärmt, so dass die Anordnung in die profilierte Seite der Form gedrückt wird, um die profilierte Seite des Elastomerkörpers zu bilden.

Die Anordnung oder die geformte Anordnung werden dann gemäß Schritt d) vulkanisiert, um den Elastomerkörper, insbesondere den erfindungsgemäßen Elastomerkörper, zu bilden. Wie gesagt handelt es sich bei dem erhaltenen Elastomerkörper bevorzugt um einen Antriebsriemen.

Die Vulkanisation der Anordnung erfolgt nach den üblichen Methoden der Kautschuktechnologie, mit denen der Fachmann vertraut ist, in der Regel bei erhöhter Temperatur und gegebenenfalls erhöhtem Druck. Die erste Kautschukplatte bildet bei der Vulkanisation die Elastomerplatte und die zweite Kautschukplatte den elastomeren Grundköper des Elastomerartikels.

Die Erfindung betrifft ferner die Verwendung eines Verbunds aus einer Elastomerplatte, die Teilchen, bevorzugt Kügelchen, aus vernetztem Polyorganosiloxan enthält, und einem textilen Flächenkörper, als Oberflächenschicht auf der Kraftübertragungszone von Elastomerkörpern, insbesondere Antriebsriemen.

Alle Angaben zu dem erfindungsgemäßen Elastomerartikel und dem erfindungsgemäßen Verfahren gelten genauso auch für die erfindungsgemäße Verwendung, so dass darauf verwiesen wird.

Insbesondere umfasst der Elastomerartikel neben dem Verbund aus Elastomerplatte und textilem Flächenkörper einen elastomeren Grundkörper, wobei der Verbund als Oberflächenschicht auf einer Seite des Grundkörpers angeordnet ist, so dass der textile Flächenkörper dem Grundkörper zugewandt ist.

Die Erfindung wird nachfolgend über Ausführungsbeispiele und Zeichnungen näher erläutert.

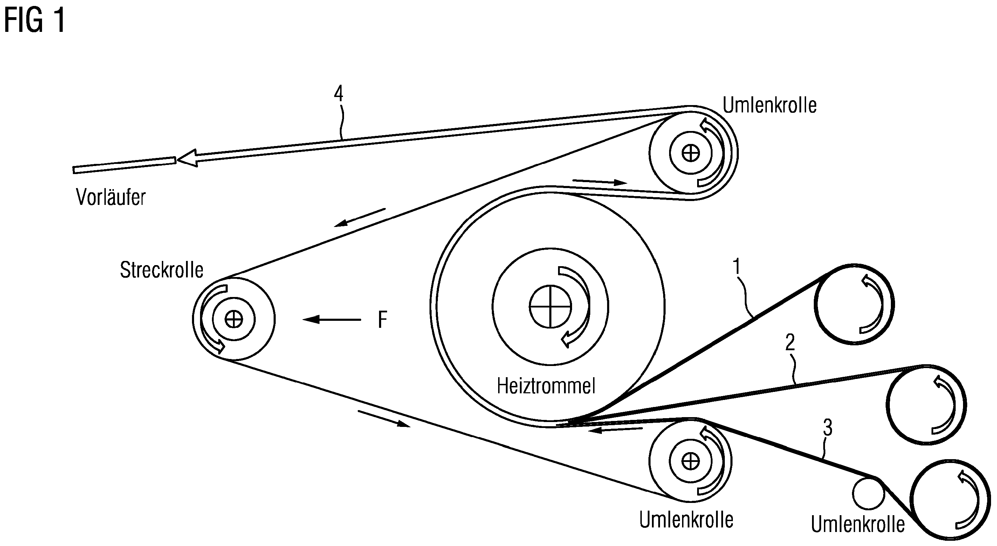

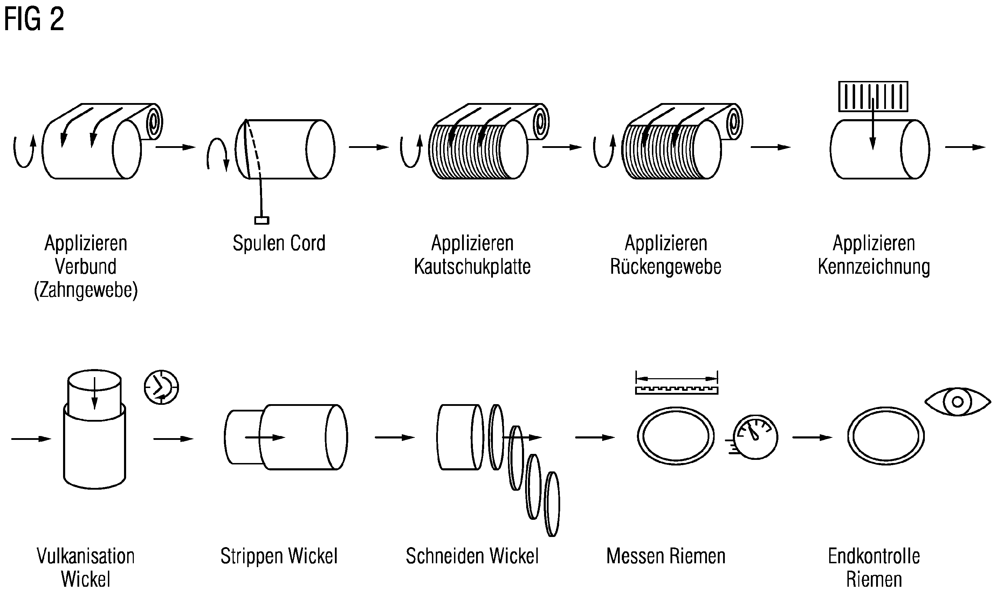

Fig. 1 zeigt ein Beispiel für die Bildung eines Verbunds durch eine erfindungsgemäße Feststoffbeschichtung eines Gewebes mit einer Kautschukplatte 1, die Kügelchen aus vernetztem Polyorganosiloxan enthält. Die Kautschukplatte 1, die Kügelchen aus vernetztem Polyorganosiloxan enthält, kann mit einer Formulierung gemäß einem der Beispiele 1 bis 3 durch Kalandrieren hergestellt werden. Die Dicke der Kautschukplatte kann im Bereich von 0,1 bis 1,0 mm, bevorzugt 0,2 bis 0,4 mm, z.B. etwa 0,3 mm, liegen. Das Gewebe 2 ist z.B. aus einem Polyamidgarn mit einem Flächengewicht von etwa 700 g/m². Das Gewebe kann z.B. eine Dicke im Bereich von 0,5 bis 2 mm, bevorzugt 0,8 bis 1,7 mm, aufweisen. Das Haftmittel 3 ist eine Bahn aus einer Einbettmischung, z.B. einem Haftzement oder einer Gummimischung. Die Kautschukplatte 1, das Gewebe 2 und das Haftmittel 3 werden dann zu einer Heiztrommel geführt, wobei das Gewebe 2 zwischen der Kautschukplatte 1 und dem Haftmittel 3 positioniert ist. Die Komponenten werden dann mittels der Heiztrommel über das übliche Skim-Verfahren miteinander verbunden, so dass das Gewebe 2 auf der einen Seite mit der Kautschukplatte 1 und auf der anderen Seite mit dem Haftmittel 3 beschichtet bzw. belegt ist. Der erhaltene Verbund 4 bzw. das Funktionsgewebe kann dann zur Herstellung eines erfindungsgemäßen Elastomerartikels eingesetzt werden, wobei das Haftmittel 3 dem Grundkörper zugewandt ist und die Kautschukplatte nach außen gerichtet ist. Bei der in Figur 2 gezeigten Herstellung eines Zahnriemens bildet die Kautschukplatte 1 die Zahnseite und das Haftmittel 3 die Cordseite.
Fig. 2 zeigt ein Beispiel für einen schematischen Ablauf eines erfindungsgemäßen Verfahrens zur Herstellung eines erfindungsgemäßen Elastomerartikels, nämlich eines Gummizahnriemens. Ein Verbund aus einem Gewebe, das auf einer Seite mit einer Kügelchen aus vernetztem Polyorganosiloxan enthaltenden Kautschukplatte, und auf der anderen Seite mit einem Haftmittel beschichtet ist, z.B. wie in dem in Figur 1 beschriebenen Verfahren hergestellt, wird in einem ersten Schritt auf eine Trommel aufgelegt, wobei die Kautschukplatte zur Rolle zeigt. Im zweiten Schritt wird ein Cord auf den Verbund aufgespult, so dass der Cord auf dem Haftmittel des Verbunds angeordnet wird. Durch das Haftmittel wird der Cord in geeigneter Weise fixiert. Anschließend wird eine Kautschukplatte, die den Grundkörper des Riemens bilden wird, auf den aufgespulten Cord aufgelegt.

Optional kann anschließend noch ein weiteres Gewebe auf die Kautschukplatte aufgelegt werden, die ein Rückengewebe des Riemens bilden kann (Textilauflage). Es ist weiter möglich, die gebildete Anordnung (Rohling) mit einer Kennzeichnung zu versehen. Die beiden Enden der Anordnung werden verbunden, um einen Wickel zu bilden.

Der gebildete Wickel wird in eine Form platziert, wobei der Verbund zur Innenseite der Form zeigt. Die Form stellt eine Vulkanisationskammer dar, die auf der Innenseite eine profilierte Oberfläche aufweist. Das Profil der Oberfläche korrespondiert mit den Zähnen des herzustellenden Zahnriemens. Die Vulkanisationskammer wird verschlossen. Durch Wärme- und Druckbehandlung wird der Wickel gegen die profilierte Oberfläche der Form gedrückt und vulkanisiert. Nach Vulkanisation wird der Wickel aus der Form genommen, von der Trommel abgezogen und zu den fertigen Zahnriemen geschnitten. Die hergestellten Zahnriemen können dann noch üblicherweise verschiedenen Kontrollprozeduren zur Qualitätskontrolle unterzogen werden.

### Beispiele 1 bis 3

Es wurden Kautschukmischungen gemäß der in nachstehenden Tabelle 1 gezeigten Zusammensetzung hergestellt. Die in Tabelle angegebenen Mengen sind in phr (Gew.-Teile pro 100 Gew.-Teile Kautschuk). Bei den Mikrokügelchen aus vernetztem Polyorganosiloxan handelt es sich um Tospearls^{®}120, ein Handelsprodukt von Momentive. Dabei handelt es sich um Mikrokügelchen aus vernetztem Polyorganosiloxan mit einem mittleren Teilchendurchmesser von etwa 2 µm. Das vernetzte Polyorganosiloxan ist insbesondere ein Methylsilsesquioxan.

**Tabelle 1**

| | Beispiel 1 | Beispiel 2 | Beispiel 3 |
|---|---|---|---|
| hydrierter Nitrilkautschuk (HNBR) | 100 | 100 | 100 |
| Ruß N220 | 10 | 10 | 10 |
| Dipropylenglycoldiacrylat (DPGDA) | 25 | 25 | 25 |
| (Aktivator/Vernetzer) | | | |
| Mikrokügelchen aus vernetztem | 20 | 40 | 60 |
| Polyorganosiloxan | | | |
| Ruß N550 | 25 | 25 | 25 |
| Stearinsäure | 1 | 1 | 1 |
| Zinkoxid | 5 | 5 | 5 |
| Alterungsschutzmittel 1 | 2 | 2 | 2 |
| Alterungsschutzmittel 2 | 2 | 2 | 2 |
| Peroxidverbindung (Vernetzer) | 10 | 10 | 10 |

Aus den Kautschukmischungen können durch Kalandrieren Kautschukplatten hergestellt werden, z.B. mit Dicken im Bereich von 0,1 bis 1,0 mm, bevorzugt 0,2 bis 0,4 mm, insbesondere etwa 0,3 mm. Diese können dann zur Herstellung eines Verbunds aus der Kautschukplatte mit einem textilen Flächenkörper verwendet werden, wie beispielsweise zu Figur 1 beschrieben.

Die Kautschukmischungen der Beispiele 1 bis 3 wurden auf Basis folgender Prüfvorschriften getestet:
Drehmoment Fa bzw. Fe mittels rotorlosem Vulkameter (MDR = Moving Disc Rheometer) gemäß DIN 53529
Mooney-Viskosität (ML 1 + 4) bei 100°C gemäß ASTM D1646

Aus den Kautschukmischungen der Beispiele 1 bis 3 wurden ferner vulkanisierte Prüfkörper (Platten, Dicke 2 mm) hergestellt (Vulkanisation: 20 min bei 180°C). Die Prüfkörper wurden auf Basis folgender Prüfvorschriften getestet:
Shore-A-Härte gemäß DIN 53 505
Festigkeit und Spannungswerte bei 50% und 100% Dehnung gemäß DIN 53 504, DIN 53455, DIN 53571

Die Ergebnisse sind in Tabelle 2 zusammengefasst.

**Tabelle 2**

| | Beispiel 1 | Beispiel 2 | Beispiel 3 |
|---|---|---|---|
| MDR 2000 (180°C), 20 min | | | |
| Fa [dNm] | 0,53 | 0,70 | 0,84 |
| Fe [dNm] | 27,88 | 34,88 | 42,41 |
| Fe - Fa [dNm] | 27,35 | 34,18 | 41,57 |
| Mooney ML 1 + 4 (100°C) | 32 | 36 | 40 |
| 20 min@180°C | | | |
| Härte [Shore A] | 72 | 75 | 79 |
| Festigkeit [MPa] | 13,8 | 13,5 | 10,1 |
| Spannungswert 50% [MPa] | 2,2 | 2,6 | 3,3 |
| Spannungswert 100% [MPa] | 4,5 | 4,8 | 5,3 |

### Beispiel 4

Aus der Kautschukmischung gemäß Beispiel 1 wurde durch Kalandrieren eine Kautschukplatte mit einer Dicke von 0,3 mm hergestellt. Ein Gewebe aus einem Polyamidgarn mit einem Flächengewicht von etwa 700 g/m² wurde entsprechend dem zu Figur 1 beschriebenen Verfahren auf einer Seite mit der Kautschukplatte und auf der anderen Seite mit einem Haftmittel beschichtet, um einen Verbund zu bilden.

Mit dem so hergestellten Verbund wurde ein Zahnriemen entsprechend dem zu Figur 2 beschriebenen Verfahren hergestellt, so dass der Zahnriemen auf der Zahnseite mit dem Verbund versehen war.

### Vergleichsbeispiel 1

Ein Gewebe aus einem Polyamidgarn mit einem Flächengewicht von etwa 700 g/m² wurde gemäß dem Stand der Technik auf einer Seite mit PTFE-haltiger Beschichtung ausgerüstet und auf der anderen Seite mit einem Haftmittel versehen.

Die Beschichtung des Gewebes mit der PTFE-haltigen Ausrüstung erfolgte durch eine Nassbeschichtung mittels Streichen mit einer Dispersion auf Basis folgender Formulierung (% = Gew.-% bezogen auf das Feststoffgewicht):
20 bis 40% Polyurethan, bevorzugt 25 bis 35 % Polyurethan
35 bis 55% mitvernetzender Weichmacher, bevorzugt 40 bis 45%
10 bis 30% PTFE Pulver, bevorzugt 15 bis 25%
1 bis 10% Peroxid als Reaktionsstarter, bevorzugt 2,5 bis 7,5%

Das hergestellte Gewebe mit PTFE-Ausrüstung wurde dann zur Herstellung eines Zahnriemens eingesetzt, wobei die Herstellung dem im Beispiel 4 beschriebenen Verfahren entspricht, außer dass statt des Verbunds gemäß Beispiel 4 das Gewebe mit PTFE-Ausrüstung eingesetzt wurde. Die PTFE-Beschichtung befindet sich auf der Außenseite der Zahnseite.

### Laufzeittest Zahnriemen

Die in Beispiel 4 und Vergleichsbeispiel 1 hergestellten Zahnriemen wurden einem Laufzeittest in einem Riementriebprüfstand mit Wärmekammer bei 140 °C und 2700 N Belastung unterworfen.

Die Laufzeit des in Beispiel 4 hergestellten erfindungsgemäßen Zahnriemens bis zum Funktionsverlust betrug 129 Stunden.

Die Laufzeit des in Vergleichsbeispiel 1 hergestellten nicht erfindungsgemäßen Zahnriemens bis zum Funktionsverlust betrug 94 Stunden (Mittelwert aus 3 Versuchen: 111, 74 und 97 Stunden).

Die Laufzeit im dynamischen Belastungstest für den erfindungsgemäße Riemen liegt somit sogar über dem Niveau des Musterriemens mit PTFE als Gleitmittel. Die physikalischen statischen Prüfungen aus dem Prüflabor zeigen mindestens gleichwertige Festigkeiten.

### Bezugszeichenliste

- 1: Kautschukplatte, enthaltend Kügelchen aus vernetztem Polyorganosiloxan
- 2: Gewebe
- 3: Haftmittel
- 4: Verbund

## Patentansprüche

1. Elastomerartikel, umfassend einen elastomeren Grundkörper und einen Verbund aus einer Elastomerplatte und einem textilen Flächenkörper, wobei der Verbund als Oberflächenschicht auf einer Seite des Grundkörpers angeordnet ist, so dass der textile Flächenkörper dem Grundkörper zugewandt ist, und wobei die Elastomerplatte Teilchen, bevorzugt Kügelchen, aus vernetztem Polyorganosiloxan enthält **dadurch gekennzeichnet, dass** der Mengenanteil der Teilchen, bevorzugt Kügelchen, aus vernetztem Polyorganosiloxan in der Elastomerplatte 5 bis 60 phr, bevorzugt 10 bis 50 phr, bevorzugter 20 bis 40 phr, beträgt und die Teilchen, bevorzugt Kügelchen, einen mittleren Durchmesser von 0,5 bis 12 µm, bevorzugt von 1 bis 10 µm, bevorzugter von 1,5 bis 5 µm, aufweisen.

2. Elastomerartikel nach Anspruch 1, wobei der Elastomerartikel ein Antriebsriemen ist, wobei der Antriebsriemen bevorzugt ausgewählt ist aus einem Transportriemen, einem Flachriemen, einem Keilriemen, einem Keilrippenriemen und einem Zahnriemen, bevorzugt einem Zahnriemen.

3. Elastomerartikel nach einem der vorhergehenden Ansprüche, wobei die Seite des Grundkörpers, auf der der Verbund angeordnet ist, eine Kraftübertragungszone des Elastomerartikels, bevorzugt des Antriebsriemens, ist.

4. Elastomerartikel nach einem der vorhergehenden Ansprüche, wobei der textile Flächenkörper ein Gewebe, ein Gewirke oder ein Gestrick, bevorzugt ein Gewebe, ist.

5. Elastomerartikel nach einem der vorhergehenden Ansprüche, wobei die Elastomerplatte aus einem vulkanisierten Kautschukcompound gebildet ist,
wobei der Kautschuk ausgewählt ist aus der Gruppe bestehend aus (teil)hydriertem Nitrilkautschuk (HNBR), Nitrilkautschuk (NBR), Ethylen-Propylen-Kautschuk (EPM), Ethylen-Propylen-Dien-Kautschuk (EPDM), Naturkautschuk (NR), Polychloropren-Kautschuk (CR), Butadien-Kautschuk (BR), Ethylen-Vinyl-Acetat-Copolymer (EVA), Styrol-Butadien-Kautschuk (SBR), Polyurethan (PU) oder Mischungen davon, bevorzugt (teil)hydriertem Nitrilkautschuk (HNBR) und/oder Ethylen-Propylen-Dien-Kautschuk (EPDM), und/oder Nitrilkautschuk (NBR), und/oder
wobei der Kautschuk kein Fluorkautschuk (FKM) ist.

6. Elastomerartikel nach einem der vorhergehenden Ansprüche, wobei die Elastomerplatte eine Dicke im Bereich von 0,1 bis 1,0 mm, bevorzugt von 0,2 bis 0,4 mm, aufweist.

7. Elastomerartikel nach einem der vorhergehenden Ansprüche, wobei das vernetzte Polyorganosiloxan Phenylgruppen und/oder Alkylgruppen mit 1 bis 8 Kohlenstoffatomen, bevorzugt 1 oder 2 Kohlenstoffatomen, als organische Gruppen aufweist.

8. Elastomerartikel nach einem der vorhergehenden Ansprüche, wobei das vernetzte Polyorganosiloxan ein Silsesquioxan, bevorzugt ein Methylsilsesquioxan, ist.

9. Elastomerartikel nach einem der vorhergehenden Ansprüche, ferner umfassend mindestens eine Zwischenschicht, insbesondere mindestens eine Haftschicht, zwischen dem Grundkörper und dem Verbund.

10. Elastomerartikel, erhältlich durch ein Verfahren nach Anspruch 9

11. Verfahren zur Herstellung eines Elastomerartikels, insbesondere eines Elastomerartikels nach einem der vorhergehenden Ansprüche, wobei das Verfahren die folgenden Schritte umfasst:
a) Bilden eines Verbundes durch Beschichten eines textilen Flächenkörpers mit einer ersten unvulkanisierten Kautschukplatte, bevorzugt durch Kalandrieren, wobei die erste Kautschukplatte Teilchen, bevorzugt Kügelchen, aus vernetztem Polyorganosiloxan enthält,
b) Bauen einer Anordnung, umfassend eine zweite unvulkanisierte Kautschukplatte und den Verbund, wobei der textile Flächenkörper des Verbunds der zweiten unvulkanisierten Kautschukplatte zugewandt ist,
c) gegebenenfalls Formen der Anordnung und
d) Vulkanisieren der gegebenenfalls geformten Anordnung.

12. Verwendung eines Verbunds aus einer Elastomerplatte, die Teilchen, bevorzugt Kügelchen, aus vernetztem Polyorganosiloxan enthält, und einem textilen Flächenkörper, als Oberflächenschicht auf der Kraftübertragungszone von Elastomerkörpern, insbesondere Antrieb sriemen wobei der Mengenanteil der Teilchen, bevorzugt Kügelchen, aus vernetztem Polyorganosiloxan in der Elastomerplatte 5 bis 60 phr, bevorzugt 10 bis 50 phr, bevorzugter 20 bis 40 phr, beträgt und die Teilchen, bevorzugt Kügelchen, einen mittleren Durchmesser von 0,5 bis 12 µm, bevorzugt von 1 bis 10 µm, bevorzugter von 1,5 bis 5 µm, aufweisen.

## Claims

1. Elastomer article comprising an elastomeric base body and a composite of an elastomer sheet and a textile sheet material, wherein the composite is arranged as a surface layer on one side of the base body such that the textile sheet material faces the base body, and wherein the elastomer sheet contains particles, preferably beads, of crosslinked polyorganosiloxane, **characterized in that** the proportion by amount of the particles, preferably beads, of crosslinked polyorganosiloxane in the elastomer sheet is 5 to 60 phr, preferably 10 to 50 phr, more preferably 20 to 40 phr, and the particles, preferably beads, have an average diameter of 0.5 to 12 µm, preferably of 1 to 10 µm, more preferably of 1.5 to 5 µm.

2. Elastomer article according to claim 1, wherein the elastomer article is a drive belt, wherein the drive belt is preferably selected from a conveyor belt, a flat belt, a V-belt, a V-ribbed belt and a toothed belt, preferably a toothed belt.

3. Elastomer article according to any one of the preceding claims, wherein the side of the base body on which the composite is arranged is a force-transmission zone of the elastomer article, preferably of the drive belt.

4. Elastomer article according to any one of the preceding claims, wherein the textile sheet material is a woven fabric, a warp-knitted fabric or a knitted fabric, preferably a woven fabric.

5. Elastomer article according to any one of the preceding claims, wherein the elastomer sheet is formed from a vulcanized rubber compound, wherein the rubber is selected from the group consisting of (partially) hydrogenated nitrile rubber (HNBR), nitrile rubber (NBR), ethylene-propylene rubber (EPM), ethylene-propylene-diene rubber (EPDM), natural rubber (NR), polychloroprene rubber (CR), butadiene rubber (BR), ethylene-vinyl acetate copolymer (EVA), styrenebutadiene rubber (SBR), polyurethane (PU) or mixtures thereof, preferably (partially) hydrogenated nitrile rubber (HNBR) and/or ethylene-propylene-diene rubber (EPDM), and/or nitrile rubber (NBR), and/or wherein the rubber is not a fluoro rubber (FKM).

6. Elastomer article according to any one of the preceding claims, wherein the elastomer sheet has a thickness in the range of 0.1 to 1.0 mm, preferably of 0.2 to 0.4 mm.

7. Elastomer article according to any one of the preceding claims, wherein the crosslinked polyorganosiloxane has phenyl groups and/or alkyl groups having 1 to 8 carbon atoms, preferably 1 or 2 carbon atoms, as organic groups.

8. Elastomer article according to any one of the preceding claims, wherein the crosslinked polyorganosiloxane is a silsesquioxane, preferably a methylsilsesquioxane.

9. Elastomer article according to any one of the preceding claims, further comprising at least one intermediate layer, in particular at least one adhesive layer, between the base body and the composite.

10. Elastomer article obtainable by a process according to claim 11.

11. Process for producing an elastomer article, in particular an elastomer article according to any one of the preceding claims, wherein the process comprises the following steps: a) forming a composite by coating a textile sheet material with a first unvulcanized rubber sheet, preferably by calendering, wherein the first rubber sheet contains particles, preferably beads, of crosslinked polyorganosiloxane, b) building an arrangement comprising a second unvulcanized rubber sheet and the composite, wherein the textile sheet material of the composite faces the second unvulcanized rubber sheet, c) optionally shaping the arrangement, and d) vulcanizing the optionally shaped arrangement.

12. Use of a composite of an elastomer sheet, which contains particles, preferably beads, of crosslinked polyorganosiloxane, and a textile sheet material, as a surface layer on the force-transmission zone of elastomer bodies, in particular drive belts, wherein the proportion by amount of the particles, preferably beads, of crosslinked polyorganosiloxane in the elastomer sheet is 5 to 60 phr, preferably 10 to 50 phr, more preferably 20 to 40 phr, and the particles, preferably beads, have an average diameter of 0.5 to 12 µm, preferably of 1 to 10 µm, more preferably of 1.5 to 5 µm.

## Revendications

1. Article en élastomère comprenant un corps de base élastomère et un composite constitué d'une plaque d'élastomère et d'un corps textile plat, dans lequel le composite est disposé en tant que couche de surface sur un côté du corps de base, de sorte que le corps textile plat est orienté vers le corps de base, et dans lequel la plaque d'élastomère contient des particules, de préférence des billes, de polyorganosiloxane réticulé, **caractérisé en ce que** la proportion en quantité des particules, de préférence des billes, de polyorganosiloxane réticulé dans la plaque d'élastomère est de 5 à 60 phr, de préférence de 10 à 50 phr, de manière plus préférée de 20 à 40 phr, et les particules, de préférence les billes, présentent un diamètre moyen de 0,5 à 12 µm, de préférence de 1 à 10 µm, de manière plus préférée de 1,5 à 5 µm.

2. Article en élastomère selon la revendication 1, dans lequel l'article en élastomère est une courroie d'entraînement, dans lequel la courroie d'entraînement est de préférence choisie parmi une courroie de transport, une courroie plate, une courroie trapézoïdale, une courroie striée et une courroie dentée, de préférence une courroie dentée.

3. Article en élastomère selon l'une quelconque des revendications précédentes, dans lequel le côté du corps de base sur lequel le composite est disposé est une zone de transmission de force de l'article en élastomère, de préférence de la courroie d'entraînement.

4. Article en élastomère selon l'une quelconque des revendications précédentes, dans lequel le corps textile plat est un tissu, un tricot à mailles jetées ou un tricot à mailles cueillies, de préférence un tissu.

5. Article en élastomère selon l'une quelconque des revendications précédentes, dans lequel la plaque d'élastomère est formée d'un mélange de caoutchouc vulcanisé, dans lequel le caoutchouc est choisi dans le groupe constitué par le caoutchouc nitrile (partiellement) hydrogéné (HNBR), le caoutchouc nitrile (NBR), le caoutchouc éthylène-propylène (EPM), le caoutchouc éthylène-propylène-diène (EPDM), le caoutchouc naturel (NR), le caoutchouc polychloroprène (CR), le caoutchouc butadiène (BR), un copolymère éthylène-acétate de vinyle (EVA), le caoutchouc styrène-butadiène (SBR), le polyuréthane (PU) ou des mélanges de ceux-ci, de préférence le caoutchouc nitrile (partiellement) hydrogéné (HNBR) et/ou le caoutchouc éthylène-propylène-diène (EPDM), et/ou le caoutchouc nitrile (NBR), et/ou dans lequel le caoutchouc n'est pas un caoutchouc fluoré (FKM).

6. Article en élastomère selon l'une quelconque des revendications précédentes, dans lequel la plaque d'élastomère présente une épaisseur dans la plage de 0,1 à 1,0 mm, de préférence de 0,2 à 0,4 mm.

7. Article en élastomère selon l'une quelconque des revendications précédentes, dans lequel le polyorganosiloxane réticulé présente des groupes phényle et/ou des groupes alkyle ayant 1 à 8 atomes de carbone, de préférence 1 ou 2 atomes de carbone, en tant que groupes organiques.

8. Article en élastomère selon l'une quelconque des revendications précédentes, dans lequel le polyorganosiloxane réticulé est un silsesquioxane, de préférence un méthylsilsesquioxane.

9. Article en élastomère selon l'une quelconque des revendications précédentes, comprenant en outre au moins une couche intermédiaire, en particulier au moins une couche d'adhésion, entre le corps de base et le composite.

10. Article en élastomère pouvant être obtenu par un procédé selon la revendication 11.

11. Procédé de fabrication d'un article en élastomère, en particulier d'un article en élastomère selon l'une quelconque des revendications précédentes, dans lequel le procédé comprend les étapes suivantes : a) formation d'un composite par revêtement d'un corps textile plat avec une première plaque de caoutchouc non vulcanisé, de préférence par calandrage, dans lequel la première plaque de caoutchouc contient des particules, de préférence des billes, de polyorganosiloxane réticulé, b) construction d'un agencement comprenant une deuxième plaque de caoutchouc non vulcanisé et le composite, dans lequel le corps textile plat du composite est orienté vers la deuxième plaque de caoutchouc non vulcanisé, c) éventuellement mise en forme de l'agencement et d) vulcanisation de l'agencement éventuellement mis en forme.

12. Utilisation d'un composite constitué d'une plaque d'élastomère, qui contient des particules, de préférence des billes, de polyorganosiloxane réticulé, et d'un corps textile plat, en tant que couche de surface sur la zone de transmission de force de corps élastomères, en particulier de courroies d'entraînement, dans laquelle la proportion en quantité des particules, de préférence des billes, de polyorganosiloxane réticulé dans la plaque d'élastomère est de 5 à 60 phr, de préférence de 10 à 50 phr, de manière plus préférée de 20 à 40 phr, et les particules, de préférence les billes, présentent un diamètre moyen de 0,5 à 12 µm, de préférence de 1 à 10 µm, de manière plus préférée de 1,5 à 5 µm.
